# EUROPÄISCHE PATENTANMELDUNG

(11) **EP 1 096 172 A2**
(43) Veröffentlichungstag der Anmeldung: **02.05.2001**
(21) Anmeldenummer: 00119465.3
(22) Anmeldetag: 15.09.2000
(51) Int. Cl.: F16H 3/12

(54) **Automatisiertes Lastschaltgetriebe und Verfahren zu dessen Steuerung**

(30) Priorität: 30.10.1999 DE 19952535
(71) Anmelder: Volkswagen Aktiengesellschaft, 38436 Wolfsburg (DE)
(72) Erfinder: Damm, Ansgar, Dr., 38518 Gifhorn (DE); Fähland, Jörg, Dipl.-Ing., 38524 Sassenburg (DE); Cappelmann, Bernd, 38167 Wendeburg (DE); Wilken, Martin, Dipl.-Ing., 38114 Braunschweig (DE); Felske, Andreas, 38442 Wolfsburg (DE)

(57) **Zusammenfassung**

Ein automatisiertes Lastschaltgetriebe, das insbesondere für ein Kraftfahrzeug mit einem als Verbrennungsmotor ausgebildeten Antriebsmotor vorgesehen ist, weist eine Getriebeeingangswelle (8), eine Getriebeabtriebswelle (20), eine Anfahrkupplung und mehrere mittels unsynchronisierter Gangschaltkupplungen (12, 13) schaltbare Gangstufen auf. Für Zugschaltungen ist eine der Gangstufen in Verbindung mit einer zugeordneten Zugsynchronisierkupplung (15) als Zugschaltgang vorgesehen, und für Schubschaltungen ist eine andere der Gangstufen in Verbindung mit einer zugeordneten Schubsynchronisierkupplung (17) als Schubschaltgang vorgesehen.

Ein Verfahren zur Steuerung eines erfindungsgemäßen automatisierten Lastschaltgetriebes sieht bei einer Zugschaltung von einem Quellgang in einen Zielgang, die beide nicht als Zug- oder Schubschaltgang vorgesehen sind, zunächst ein Schließen der Zugsynchronisierkupplung (15) vor, bis ein wirksames Zugmoment alleine über die Zugsynchronisierkupplung (15) und den Zugschaltgang übertragen wird. Danach ist ein Öffnen der dem Quellgang zugeordneten Gangschaltkupplung (12, 13), eine Synchronisierung der Getriebeeingangswelle (8) bezüglich der dem Zielgang zugeordneten Gangschaltkupplung (12, 13) durch Schließen oder Öffnen der Zugsynchronisierkupplung (15), ein Schließen der dem Zielgang zugeordneten Gangschaltkupplung (12, 13), und abschließend ein vollständiges Öffnen der Zugsynchronisierkupplung (15) vorgesehen.

## Beschreibung

Die Erfindung betrifft ein automatisiertes Lastschaltgetriebe, insbesondere für ein Kraftfahrzeug mit einem als Verbrennungsmotor ausgebildeten Antriebsmotor, mit einer Getriebeeingangswelle, einer Getriebeabtriebswelle, einer Anfahrkupplung und mehreren mittels unsynchronisierter Gangschaltkupplungen schaltbaren Gangstufen. Des weiteren beschäftigt sich die Erfindung mit einem Verfahren zur Steuerung eines erfindungsgemäßen automatisierten Lastschaltgetriebes.

Lastschaltgetriebe sind insbesondere in der Bauform eines Doppelkupplungsgetriebes seit längerem bekannt und werden bevorzugt in Kraftfahrzeugen eingesetzt. Ein Doppelkupplungsgetriebe weist im allgemeinen zwei koaxial angeordnete Getriebeeingangswellen auf, denen jeweils eine separate Reibkupplung und eine Gruppe von Gangstufen zugeordnet sind. Zumeist umfaßt die eine Gruppe die Gangstufen mit ungerader Ordnungszahl einschließlich des Rückwärtsganges, während die andere Gruppe die Gangstufen mit gerader Ordnungszahl aufweist. In einem derart ausgebildeten Doppelkupplungsgetriebe besteht ein Schaltvorgang, d.h. ein Wechsel von einem wirksamen Quellgang in einen nächsthöheren oder nächstniedrigeren Zielgang zunächst in einem Einlegen des Zielganges, was Z.B. über eine entsprechende Schaltmuffe und eine einem Gangrad des Zielganges zugeordnete synchronisierte Gangschaltkupplung erfolgen kann. Danach erfolgt in überschnittener Weise, d.h. simultan, ein Öffnen der der Getriebeeingangswelle des Quellganges zugeordneten Reibkupplung und ein Schließen der der Getriebeeingangswelle des Zielganges zugeordneten Reibkupplung. Außerhalb der Schaltvorgänge erfolgt die Kraftübertragung also jeweils wechselweise über eine der beiden Getriebeeingangswellen. Ein wesentlicher Vorteil des Doppelkupplungsgetriebes gegenüber einem konventionellen Stufenwechselgetriebe liegt in den weitgehend zugkraftunterbrechungsfreien Schaltvorgängen. Hierdurch ist ein besseres Beschleunigungsvermögen im Zugbetrieb und ein besseres Verzögerungsvermögen im Schubbetrieb gegeben. Darüber hinaus ist der Fahrkomfort dadurch verbessert, daß Beschleunigungswechsel und durch eine Überbrückung von Lastspielen zwischen Bauteilen des Antriebsstranges bedingte Schlaggeräusche weitgehend vermieden werden. Dagegen ist nachteilig, daß ein Doppelkupplungsgetriebe ohne weitere Vorkehrungen nur sequentiell geschaltet werden kann, d.h. daß ein Überspringen einzelner Gangstufen nicht möglich ist.

Wie auch bei anderen Bauformen von Kraftfahrzeuggetrieben, so gibt es auch bei Doppelkupplungsgetrieben Bestrebungen, die Schaltvorgänge zu automatisieren, um u.a. den Fahrkomfort weiter zu steigern. Hierbei hat sich gezeigt, daß die Steuerung automatisierter Schaltvorgänge über Aktuatoren, die auf synchronisierte Gangschaltkupplungen einwirken, sehr schwierig und aufwendig ist. Beispielsweise ist es bei Verwendung hydraulischer Aktuatoren erforderlich, deren Arbeitsdrücke in Abhängigkeit diverser Parameter zu modulieren, um ein schnelles und dennoch verschleißarmes Schalten der Gangschaltkupplungen zu erreichen. Es gibt daher zunehmend Vorschläge, unsynchronisierte Gangschaltkupplungen zu verwenden, und die Synchronisierung der Gangschaltkupplungen auf andere Weise zu bewerkstelligen.

In der DE 196 31 983.8 wird beispielsweise ein Doppelkupplungsgetriebe mit einer Synchronisiervorrichtung und ein Verfahren zum Schalten eines derartigen Doppelkupplungsgetriebes vorgestellt. In dem betreffenden Doppelkupplungsgetriebe kommen unsynchronisierte Gangschaltkupplungen zur Anwendung. Zur Synchronisierung der Gangschaltungen weist die Synchronisiereinrichtung zwei Reibradgetriebe auf, durch die jeweils eine der beiden Getriebeeingangswellen mit der Getriebeabtriebswelle koppelbar ist. In dem entsprechenden Verfahren ist vorgesehen, daß beim Wechsel der Kraftübertragung von einer auf die andere Getriebeeingangswelle eine der beiden Reibkupplungen an der Gleitgrenze geregelt wird, um ein Blockieren des Getriebes zu vermeiden. Nachteilig ist dabei der zusätzliche Aufwand und der Platzbedarf für die Reibradgetriebe, wobei deren Steuerung bzw. Regelung aufgrund einer Temperatur- und Verschleißabhängigkeit der betreffenden Reibwerte besonders schwierig ist.

In der DE 197 11 820 A1 wird als Zusatzanmeldung zu der vorgenannten Druckschrift ein Doppelkupplungsgetriebe und ein Verfahren zum Schalten eines derartigen Doppelkupplungsgetriebes offenbart, die derart weitergebildet sind, daß ein Schaltvorgang zwischen zwei derselben Getriebeeingangswelle zugeordneten Gangstufen, mithin ein Überspringen einzelner Gangstufen, möglich ist. Dazu ist vorgesehen, zunächst auf einen der anderen Getriebeeingangswelle zugeordneten Hilfsgang zu schalten, durch den ein Füllmoment erzeugt wird, und danach auf den Zielgang zu schalten.

Schließlich wird in der EP 97 11 64 46.2 eine Getriebeanordnung eines kontinuierlich verstellbaren Stufenwechselgetriebes und ein Verfahren zur Steuerung einer derartigen Getriebeanordnung vorgeschlagen. Die Getriebeanordnung sieht ebenfalls die Verwendung unsynchronisierter Gangschaltkupplungen vor und weist einen Zusatzantrieb auf, der über ein Planetengetriebe mit den beiden Getriebeeingangswellen in Verbindung steht und u.a. als Synchronisiermittel nutzbar ist. Nachteilig an dieser Anordnung ist zum einen der Raum-, Gewichts- und Kostenaufwand für das Planetengetriebe und andererseits der Umstand, daß während eines Schaltvorganges das momentan übertragene Drehmoment über den Zusatzantrieb abgestützt werden muß.

Es ergibt sich daher das Problem, ein gattungsgemäßes automatisiertes Lastschaltgetriebe bereitzustellen, das unter Vermeidung synchronisierter Gangschaltkupplungen mit möglichst einfachen und kostengünstigen Mitteln eine Synchronisierung von Schaltvorgängen gewährleistet, wobei auch ein Überspringen von Gangstufen möglich sein soll. Des weiteren soll ein Verfahren zur Steuerung eines erfindungsgemäßen automatisierten Lastschaltgetriebes angegeben werden.

Das Problem betreffend das automatisierte Lastschaltgetriebe wird erfindungsgemäß durch die kennzeichnenden Merkmale des Anspruches 1 gelöst. Vorteilhafte Ausgestaltungen des Lastschaltgetriebes ergeben sich aus den Unteransprüchen 2 bis 11. In dem Anspruch 12 wird ein Verfahren zur Steuerung eines derartigen automatisierten Lastschaltgetriebes und in den Unteransprüchen 13 bis 17 bevorzugte Weiterbildungen dieses Verfahrens angegeben.

Das automatisierte Lastschaltgetriebe ist insbesondere für ein Kraftfahrzeug mit einem als Verbrennungsmotor ausgebildeten Antriebsmotor vorgesehen. Es weist eine Getriebeeingangswelle, eine Getriebeabtriebswelle, eine Anfahrkupplung und mehrere mittels unsynchronisierter Gangschaltkupplungen schaltbare Gangstufen auf. Erfindungsgemäß ist für Zugschaltungen eine der Gangstufen in Verbindung mit einer zugeordneten Zugsynchronisierkupplung als Zugschaltgang und für Schubschaltungen eine andere der Gangstufen in Verbindung mit einer zugeordneten Schubsynchronisierkupplung als Schubschaltgang vorgesehen.

Das erfindungsgemäße Lastschaltgetriebe ist im Vergleich zu Automatikgetrieben und automatisierten Stufenwechselgetrieben relativ einfach und kostengünstig aufgebaut. Im Gegensatz zu einem Doppelkupplungsgetriebe, bei dem zwei Getriebeeingangswellen mit jeweils einer zugeordneten Gruppe von Gangstufen und jeweils einer separaten Reibkupplung üblich sind, ist bei dem vorliegenden Lastschaltgetriebe im Prinzip nur eine einzige Getriebeeingangswelle und eine einzige Kupplung großer Kapazität als Anfahrkupplung erforderlich. Durch die Verwendung jeweils einer ohnehin vorhandenen Gangstufe als Zug- bzw. Schubschaltgang zur Synchronisierung von Schaltvorgängen wird kein spezieller Synchronisierantrieb und kein spezielles Synchronisiergetriebe benötigt. Der eigentliche Synchronisiervorgang, d.h. eine Beschleunigung oder Verzögerung der Getriebeeingangswelle zur Erreichung von Synchronlauf an einer dem jeweiligen Zielgang zugeordneten Gangschaltkupplung, erfolgt über ein Schließen oder Öffnen der Zug- bzw. Schubsynchronisierkupplung, die aufgrund der geringeren Reibleistung deutlich kleiner dimensioniert sind als die Anfahrkupplung. Die Synchronisierkupplungen stehen jeweils einerseits über den Zug- bzw. Schubschaltgang mit der Getriebeabtriebswelle und andererseits mit der Getriebeeingangswelle in Verbindung.

Unter einer Zugschaltung wird ein Schaltvorgang verstanden, der ohne Zugkraftunterbrechung auch während des Schaltvorganges eine Übertragung eines Zugmomentes von dem Antriebsmotor auf die Getriebeabtriebswelle und von dieser weiter zu den angetriebenen Rädern des Kraftfahrzeuges gewährleistet. Dies erfordert die Verwendung einer höheren Gangstufe als Zugschaltgang, da sich die Zugsynchronisierkupplung während des Synchronisiervorganges im Schlupfbetrieb befindet und sich zur Übertragung eines das Kraftfahrzeug antreibenden Zugmomentes motorseitig schneller als abtriebsseitig dreht. Entsprechend wird bei einer Schubschaltung ein Schubmoment von den angetriebenen Rädern über die Getriebeabtriebswelle, den Schubschaltgang und die Schubsynchronisierkupplung auf den Antriebsmotor übertragen, wobei eine niedrigere Gangstufe als Schubschaltgang Verwendung findet. Im Gegensatz zu anderen Getrieben, insbesondere zu Doppelkupplungsgetrieben, ist beim vorliegenden Lastschaltgetriebe ein Überspringen einzelner Gangstufen bei einem Schaltvorgang möglich, und die Synchronisierung von Schubrückschaltungen erfordert keinen Eingriff in eine Motorsteuerung des Antriebsmotors.

In einer bevorzugten Ausführung des Lastschaltgetriebes ist der Zugschaltgang einer separaten ersten Hilfswelle zugeordnet und steht über die erste Hilfswelle mit der Zugsynchronisierkupplung in Verbindung. In gleicher Weise kann der Schubschaltgang einer separaten zweiten Hilfswelle zugeordnet sein und über die zweite Hilfswelle mit der Schubsynchronisierkupplung verbunden sein. Durch die Verwendung von Hilfswellen können die Synchronisierkupplungen außerhalb eines Kupplungsgehäuses, in dem sich die Zahnräder der Gangstufen zumeist in einem Ölbad befinden, angeordnet sein. Es ist somit ohne einen besonderen Aufwand zur Abdichtung auch die Verwendung von Trockenkupplungen als Synchronisierkupplungen möglich. Im übrigen sind die Synchronisierkuppllungen bei externer Anordnung für Wartungs- und Reparaturarbeiten leichter zugänglich.

Bei der Anordnung der Hilfswellen ist es besonders platzsparend und kostengünstig, wenn eine der Hilfwellen oder beide Hilfswellen koaxial zur Getriebeeingangswelle angeordnet sind, und die der jeweiligen Hilfswelle zugeordnete Synchronisierkupplung in einem gemeinsamen Kupplungsgehäuse mit der Anfahrkupplung angeordnet ist. Dagegen müßten die Hilfswellen bei nicht koaxialer Anordnung parallel zur Getriebeeingangswelle angeordnet und die Synchronisierkupplungen über Zwischengetriebe mit dieser verbunden werden.

Alternativ kann der Zugschaltgang jedoch auch der Getriebeeingangswelle zugeordnet sein, wobei der Zugschaltgang dann unmittelbar mit der Zugsynchronisierkupplung in Verbindung steht. Da für den Zugschaltgang keine Gangschaltkupplung erforderlich ist, kann diese eingespart und an deren Stelle, d.h. zwischen einem Gangrad des Zugschaltganges und der Getriebeeingangswelle oder der Getriebeabtriebswelle, die Zugsynchronisierkupplung angeordnet werden. Diese liegt dann innerhalb des Getriebegehäuses, so daß zur Vermeidung von Abdichtungsproblemen und auch aus Platzgründen bevorzugt eine Naßkupplung, z.B. eine Lamellenkupplung, als Zugsynchronisierkupplung Verwendung findet.

Entsprechend kann auch der Schubschaltgang der Getriebeeingangswelle zugeordnet sein, und der Schubschaltgang kann unmittelbar mit der Schubsynchronisierkupplung innerhalb des Getriebegehäuses zwischen einem Gangrad des Schubschaltganges und der Getriebeeingangswelle oder der Getriebeabtriebswelle angeordnet sein. Hierdurch werden u.a. Lagerungs- und Dichtungsprobleme sowie ein fliehkraftbedingtes Bersten der Schubsynchronisierkupplung vermieden. Bei der zuvor beschriebenen Anordnung ergibt sich bei hohen Fahrzeugegschwindigkeiten aufgrund der dann hohen Drehzahl der Getriebeabtriebswelle, die über das Übersetzungsverhältnis des Schubschaltganges entsprechend vergrößert wird, in der Lagerung und Abdichtung der zweiten Hilfswelle und abtriebsseitig in der geöffneten Schubsynchronisierkupplung ein sehr hohes Drehzahlniveau, das zu den genannten Problemen führen kann.

Zur Vermeidung größerer Reibverluste, d.h. zur Reduzierung der in der jeweiligen Synchronisierkupplung auftretenden Drehzahldifferenzen, ist es günstig, die Synchronisierkupplung jeweils zwischen dem größeren Gangrad und der entsprechenden Getriebewelle anzuordnen. Es ist daher vorteilhaft, wenn die Zugsynchronisierkupplung zwischen dem Antriebsrad des Zugschaltganges und der Getriebeeingangswelle angeordnet ist, wogegen die Schubsynchronisierkupplung zwischen dem Abtriebsrad des Schubschaltganges und der Getriebeabtriebswelle angeordnet sein sollte.

Als Zugschaltgang kann die höchste Gangstufe oder die zweithöchste Gangstufe vorgesehen sein. Bei Verwendung der höchsten Gangstufe ist sichergestellt, daß alle denkbaren Zugschaltungen alleine durch eine Synchronisierung mittels der Zugschaltsynchronisierkupplung, d.h. ohne einen Eingriff in die Motorsteuerung des Antriebsmotors, durchführbar sind. Die besonders bei Schaltvorgängen zwischen niedrigeren Gangstufen in der Zugsynchronisierkupplung auftretenden Drehzahlunterschiede sind jedoch relativ groß, so daß aus diesem Grunde, insbesondere bei einem Lastschaltgetriebe mit mehr als fünf Gängen, eine Verwendung der zweithöchsten Gangstufe als Zugschaltgang vorteilhaft sein kann.

Analog dazu kann die niedrigste oder die zweitniedrigste Gangstufe als Schubschaltgang vorgesehen sein. In diesem Fall sind besonders bei Schaltvorgängen zwischen höheren Gangstufen die in der Schubsynchronisierkupplung auftretenden Drehzahlunterschiede u.U. sehr groß, so daß in diesem Fall gegebenenfalls eine Verwendung der zweitniedrigsten Gangstufe als Schubschaltgang zu bevorzugen ist.

Dagegen bietet die Verwendung der niedrigsten Gangstufe als Schubschaltgang die Möglichkeit, die ohnehin erforderliche und zumeist der ersten Gangstufe zugeordnete Anfahrkupplung auch als Schubsynchronisierkupplung zu nutzen, d.h. die Anfahrkupplung und die Schubsynchronisierkupplung als eine Kupplungseinheit auszubilden, wodurch eine Kupplungseinheit eingespart werden kann.

In dem Verfahren zur Steuerung eines erfindungsgemäßen Lastschaltgetriebes werden bei einer Zugschaltung von einem Quellgang in einen Zielgang, die beide nicht als Zug- oder Schubschaltgang vorgesehen sind, die folgenden Verfahrensschritte durchgeführt: Schließen der Zugsynchronisierkupplung, bis ein wirksames Zugmoment alleine über die Zugsynchronisierkupplung und den Zugschaltgang übertragen wird, Öffnen der dem Quellgang zugeordneten Gangschaltkupplung, Synchronisierung der Getriebeeingangswelle bezüglich der dem Zielgang zugeordneten Gangschaltkupplung durch Schließen oder Öffnen der Zugsynchronisierkupplung, Schließen der dem Zielgang zugeordneten Gangschaltkupplung, und vollständiges Öffnen der Zugsynchronisierkupplung. Hierbei wird zur Synchronisierung der Getriebeeingangswelle die Zugsynchronsierkupplung bei einer Zughochschaltung geschlossen, wodurch die Getriebeeingangswelle zusammen mit dem Antriebsmotor verzögert wird, während die Zugsynchronisierkupplung bei einer Zugrückschaltung geöffnet wird, wodurch die Getriebeeingangswelle unter der Wirkung des Antriebsmotors beschleunigt wird. Dies geschieht jeweils solange, bis an der Gangschaltkupplung des Zielganges Synchronlauf vorliegt, so daß die Gangschaltkupplung weitgehend momentenfrei und mit geringer Stellkraft geschlossen werden kann.

Ist der Schubschaltgang der Quellgang und soll ohne Zugmomentenunterbrechung in einen nicht als Zugschaltgang vorgesehenen Zielgang geschaltet werden, so wird abweichend von dem zuvor beschriebenen Verfahren anstelle der Gangschaltkupplung des Quellganges die zuvor geschlossene Schubsynchronisierkupplung vollständig geöffnet.

Entsprechend wird bei einer Zugschaltung von einem nicht als Zugschaltgang vorgesehenen Quellgang in den Schubschaltgang als Zielgang abweichend von dem Verfahren anstelle der Gangschaltkupplung des Zielganges die zuvor geöffnete Schubsynchronisierkupplung vollständig geschlossen.

Ist der Zugschaltgang gleichzeitig der Zielgang, so wird die Zugsynchronisierkupplung nach der Übernahme des Zugmomentes und dem Öffnen der dem Quellgang zugeordneten Gangschaltkupplung vollständig geschlossen, da hiermit das wirksame Zugmoment vollständig von dem Zielgang übertragen wird.

Bei einer Zugschaltung von dem Zugschaltgang als Quellgang in einen nicht als Schubschaltgang vorgesehenen Zielgang wird nur die Synchronisierung der Getriebeeingangswelle bezüglich der dem Zielgang zugeordneten Gangschaltkupplung, das Schließen der dem Zielgang zugeordneten Gangschaltkupplung, und das vollständige Öffnen der Zugsynchronisierkupplung durchgeführt, da das Zugmoment zu Beginn des Schaltvorganges schon vollständig von der Zugsynchronisierkupplung übertragen wird.

Entsprechend werden bei einer Schubschaltung von einem Quellgang in einen Zielgang, die beide nicht als Zug- oder Schubschaltgang vorgesehen sind, folgende Verfahrensschritte durchgeführt: Schließen der Schubsynchronisierkupplung, bis ein wirksames Zugmoment alleine über die Schubsynchronisierkupplung und den Schubschaltgang übertragen wird, Öffnen der dem Quellgang zugeordneten Gangschaltkupplung, Synchronisierung der Getriebeeingangswelle bezüglich der dem Zielgang zugeordneten Gangschaltkupplung durch Schließen oder Öffnen der Schubsynchronisierkupplung, Schließen der dem Zielgang zugeordneten Gangschaltkupplung, und vollständiges Öffnen der Schubsynchronisierkupplung. Im Gegensatz zur Steuerung der Zugsynchronisierkupplung bei einer Zugschaltung wird hier zur Synchronisierung der Getriebeeingangswelle die Schubsynchronsierkupplung bei einer Schubhochschaltung geöffnet, wodurch die Getriebeeingangswelle unter der Wirkung des im Schubbetrieb befindlichen Antriebsmotors verzögert wird, während die Schubsynchronisierkupplung bei einer Schubrückschaltung geschlossen wird, wodurch die Getriebeeingangswelle unter der Wirkung der treibenden Masse des Karftfahrzeuges beschleunigt wird.

Ist der Zugschaltgang der Quellgang und soll ohne Schubmomentenunterbrechung in einen nicht als Schubschaltgang vorgesehenen Zielgang geschaltet werden, so wird abweichend von dem zuvor beschriebenen Verfahren anstelle der Gangschaltkupplung des Quellganges die zuvor geschlossene Zugsynchronisierkupplung vollständig geöffnet.

Entsprechend wird bei einer Schubschaltung von einem nicht als Schubschaltgang vorgesehenen Quellgang in den Zugschaltgang als Zielgang abweichend von dem Verfahren anstelle der Gangschaltkupplung des Zielganges die zuvor geöffnete Zugsynchronisierkupplung vollständig geschlossen.

Bei einer Schubschaltung von einem nicht als Zugschaltgang vorgesehenen Quellgang in den Schubschaltgang als Zielgang wird die Schubsynchronisierkupplung nach dem Schließen der Schubsynchronisierkupplung und dem Öffnen der dem Quellgang zugeordneten Gangschaltkupplung vollständig geschlossen, da hiermit das wirksame Schubmoment vollständig von dem Zielgang übertragen wird.

Bei einer Schubschaltung von dem Schubschaltgang als Quellgang in einen nicht als Zugschaltgang vorgesehenen Zielgang wird nur die Synchronisierung der Getriebeeingangswelle bezüglich der dem Zielgang zugeordneten Gangschaltkupplung, das Schließen der dem Zielgang zugeordneten Gangschaltkupplung, und das vollständige Öffnen der Schubsynchronisierkupplung durchgeführt, da das Zugmoment zu Beginn des Schaltvorganges schon vollständig von der Schubsynchronisierkupplung übertragen wird.

Eine Schaltung von dem Zugschaltgang in den Schubschaltgang und umgekehrt ist zwar prinzipiell möglich, kommt aber praktisch nicht vor. Als Zugschaltgang wird zumeist die höchste oder zweithöchste Gangstufe, als Schubschaltgang dagegen die niedrigste oder zweitniedrigste Gangstufe verwendet, so daß der Übersetzungsunterschied für eine direkte Schaltung zwischen diesen beiden Gängen zu groß ist.

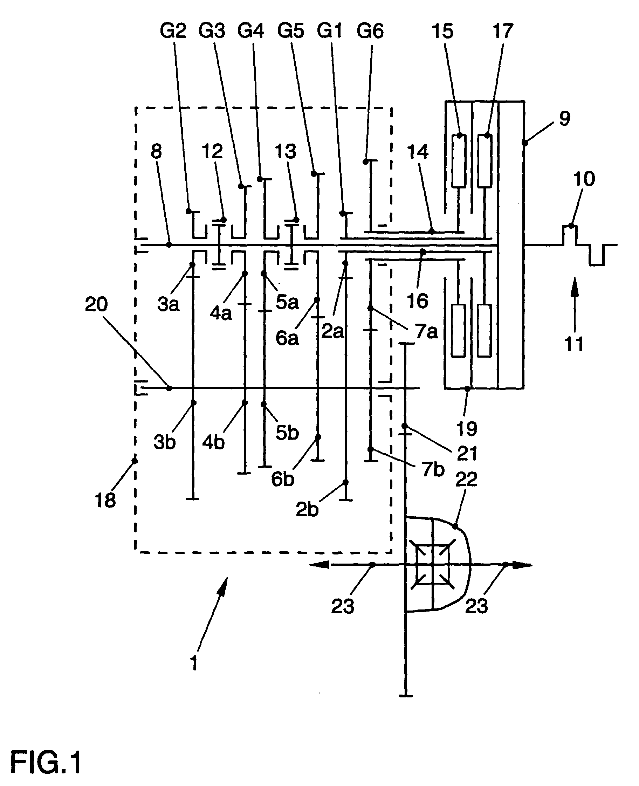

Nachfolgend werden die Merkmale, Vorteile und vorteilhafte Ausgestaltungen des erfindungsgemäßen Lastschaltgetriebes und des Verfahrens zur Steuerung eines derartigen Lastschaltgetriebes anhand der Figuren 1 bis 3 beschrieben und erläutert. In den Figuren 1 bis 3 sind in schematischer Form drei unterschiedliche Ausführungsbeispiele des erfindungsgemäßen Lastschaltgetriebes dargestellt. Im einzelnen zeigt
- Figur 1: ein Lastschaltgetriebe mit zwei Hilfswellen und zwei extern angeordneten Synchronisierkupplungen,
- Figur 2: ein Lastschaltgetriebe mit einer Hilfwelle, einer extern angeordneten Zugsynchronisierkupplung und einer intern angeordneten Schubsynchronsierkupplung, und
- Figur 3: ein Lastschaltgetriebe ohne Hilfwellen und mit zwei intern angeordneten Synchroniserkupplungen.

In der Figur 1 ist ein automatisiertes Lastschaltgetriebe 1 dargestellt, das sechs Gangstufen aufweist, nämlich die Vorwärtsgänge G1 - G6. Ein Rückwärtsgang ist prinzipiell vorgesehen, jedoch zur besseren Übersichtlichkeit in der Figur nicht eingezeichnet. Die Vorwärtsgänge G1 - G6 weisen jeweils ein Zahnradpaar bestehend aus einem Antriebsrad 2a - 7a und einem Abtriebsrad 2b - 7b auf. Die mittleren Vorwärtsgänge G2 bis G5 sind einer Getriebeeingangswelle 8 zugeordnet, die über eine Schwungscheibe 9 fest mit einem als Verbrennungsmotor ausgebildeten und mittelks einer Kurbelwelle 10 symbolisierten Antriebsmotor 11. Die Antriebsräder 3a - 6a der mittleren Vorwärtsgänge G2 - G5 sind drehbar auf der Getriebeeingangswelle 8 gelagert und mit dieser wechselweise über zwei beidseitig wirksam ausgebildete unsynchronisierte Gangschaltkupplungen 12 und 13 drehfest verbindbar. Dagegen ist das Antriebsrad 7a des als Zugschaltgang vorgesehenen sechsten Vorwärtsganges G6 fest mit einer ersten Hilfswelle 14 verbunden, die koaxial zur Getriebeeingangswelle 8 angeordnet ist und motorseitig eine Zugsynchronisierkupplung 15 aufweist. In ähnlicher Weise ist das Antriebsrad 2a des als Schubschaltgang vorgesehenen ersten Vorwärtsganges G1 fest mit einer zweiten Hilfswelle 16 verbunden, die koaxial zur Getriebeeingangswelle 8 und zur ersten Hilfswelle 14 angeordnet ist und motorseitig eine Schubsynchronsierkupplung 17 aufweist, die im vorliegenden Fall auch als Anfahrkupplung dient. Die Zugsynchronisierkupplung 15 und die Schubsynchronisierkupplung 17 sind als Trockenkupplungen ausgebildet und außerhalb eines Getriebegehäuses 18 in einem gemeinsamen Kupplungskorb 19 angeordnet, der mit der Schwungscheibe 9 in Verbindung steht. Die Abtriebsräder 2b - 8b aller Vorwärtsgänge G1 - G6 sind fest mit einer Getriebeabtriebswelle 20 verbunden, die über ein weiteres Abtriebsrad 21 mit einem Ausgleichsgetriebe 22 in Verbindung steht, von dem zwei zu angetriebenen Rädern führende Abtriebswellen 23 abgehen.

Bei einem Anfahrvorgang wird die im vorliegenden Fall ebenfalls als Anfahrkupplung verwendete Schubsynchronisierkupplung 17 kontinuierlich geschlossen, d.h. es wird mit dem ersten Vorwärtsgang G1 angefahren. Bei einem weiteren Hochschalten in den zweiten Vorwärtsgang G2 wird zunächst die Zugsynchronisierkupplung 15 soweit geschlossen wird, bis ein wirksames Zugmoment alleine über die Zugsynchronisierkupplung 15 und den Zugschaltgang übertragen wird, der hier der sechste Vorwärtsgang G6 ist. Danach wird die Schubsynchronisierkupplung 17 geöffnet und nachfolgend eine Synchronisierung der Getriebeeingangswelle 8 bezüglich der dem zweiten Vorwärtsgang G2 zugeordneten Gangschaltkupplung 12 vorgenommen. Die Synchronisierung erfolgt durch ein Schließen der Zugsynchronisierkupplung 15, wodurch die Getriebeeingangswelle 8 verzögert wird. Bei Erreichen von Synchronlauf an der Gangschaltkupplung 12 wird diese geschlossen, und abschließend die Zugsynchronisierkupplung 15 vollständig geöffnet. Weitere Hochschaltvorgänge und auch Rückschaltvorgänge zwischen den mittleren Vorwärtsgängen G2 - G5 verlaufen nach dem gleichen Schema, wobei selbstverständlich statt der Schubsynchronisierkupplung 17 bei dem ersten Vorwärtsgang G1 als Quellgang die jeweils zugeordnete Gangschaltkupplung 12, 13 geöffnet wird. Bei einer Zugschaltung, bei der ein das Kraftfahrzeug treibendes Zugmoment übertragen wird, erfolgt das Synchronisieren, wie zuvor beschrieben, mit Hilfe des Zugschaltganges in Verbindung mit der Zugsynchronisierkupplung 15. Eine entsprechende Schubschaltung, bei der ein das Kraftfahrzeug bremsendes Schubmoment übertragen wird, verläuft prinzipiell in gleicher Weise, jedoch unter Verwendung des Schubschaltganges und der Schubsynchronisierkupplung 17.

Durch die Verwendung der Hilfswellen 14, 16 wird eine Anordnung der Synchronisierkupplungen 15, 17 außerhalb des Getriebegehäuses 18 ermöglicht. Diese können somit ohne Abdichtungs- und Platzprobleme als Trockenkupplungen ausgebildet werden und sind bei externer Anordnung für Wartungs- und Reparaturarbeiten leicht zugänglich. Durch die Verwendung der niedrigsten Gangstufe, d.h. des ersten Vorwärtsganges G1, als Schubschaltgang ist in der vorliegenden Anordnung einerseits eine Verwendung der Schubsynchronisierkupplung 17 als Anfahrkupplung möglich, so daß eine Kupplungseinheit eingespart ist. Andererseits ist dadurch sichergestellt, daß alle denkbaren Schubschaltungen alleine über eine Steuerung der Schubsynchronisierkupplung 17 durchführbar sind, d.h. beispielsweise ein Eingriff in eine Motorsteuerung des Antriebsmotors 10 vermieden werden kann. Dabei ist es für die Übertragung eines Schubmomentes während der Synchronisierung wesentlich, daß sich die Schubsynchronisierkupplung 17 in dieser Phase immer abtriebsseitig schneller dreht als motorseitig, was durch die Verwendung der niedrigsten Gangstufe, d.h. des ersten Vorwärtsganges G1, als Schubschaltgang gewährleistet ist. Entsprechendes gilt sinngemäß umgekehrt für die Zugsynchronisierkupplung 15 durch die Verwendung der höchsten Gangstufe, d.h. des sechsten Vorwärtsganges G6, als Zugschaltgang. Hier dreht sich die Zugsynchronisierkupplung 15 zur Übertragung eines Zugmomentes während der Synchronisierung motorseitig schneller als abtriebsseitig.

Im Vergleich zu Automatikgetrieben und Doppelkupplungsgetrieben ist die vorliegende Anordnung des Lastschaltgetriebes wesentlch einfacher und kostengünstiger herzustellen und weist aufgrund geringerer Reibverluste einen besseren Wirkungsgrad auf:

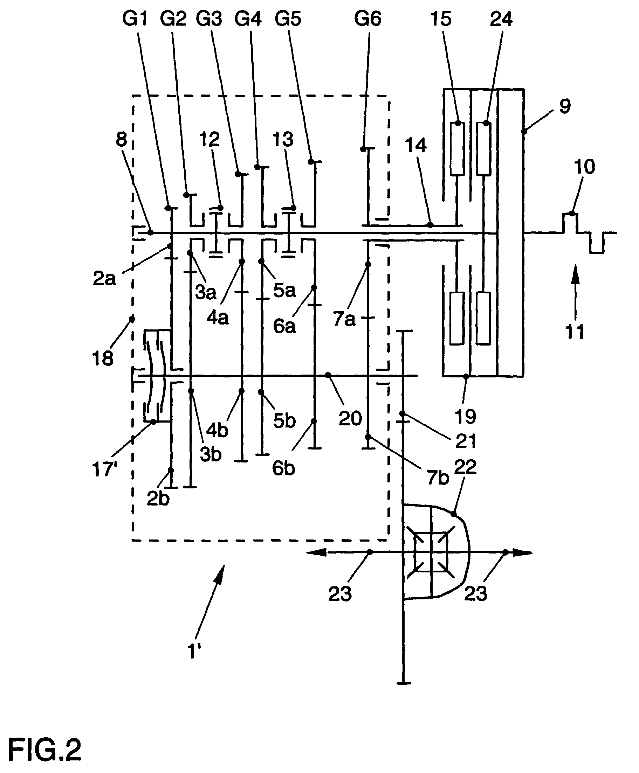

Die Figur 2 zeigt eine alternative Anordnung eines erfindungsgemäßen automatisierten Lastschaltgetriebes 1'. Im Unterschied zu dem in der Fig. 1 dargestellten Lastschaltgetriebe 1 ist der als Schubschaltgang verwendete erste Vorwärtsgang G1 im vorliegenden Fall der Getriebeeingangswelle 8 zugeordnet. Während das entsprechende Antriebsrad 2a fest mit der Getriebeeingangswelle 8 verbunden ist, ist das betreffende Abtriebsrad 2b über eine jetzt innerhalb des Getriebegehäuses 18 angeordnete und als Naßkupplung ausgebildete Schubsynchronisierkupplung 17' mit der Getriebeabtriebswelle 20 verbindbar. Hierdurch wird die in Fig. 1 dargestellte zweite Hilfswelle 16 eingespart und u.U. bei hohen Fahrgeschwindigkeiten in der dann geöffneten Schubsynchronisierkupplung 17 nach Fig. 1 auftretende fliehkraftbedingte Probleme vermieden. Dagegen ist zur Überbrückung der bei einem Anfahrvorgang auftretenden großen Drehzahlunterschiede, die von der Schubsynchronisierkupplung 17' bei kompakter Auslegung insbesondere thermisch nicht verkraftbar sind, eine zusätzliche Anfahrkupplung 24 großer Kapazität vorgesehen. Die Anfahrkupplung 24 ist als Trockenkupplung ausgebildet und zwischen der Getriebeeingangswelle 8 und der Schwungscheibe 9 in einem gemeinsamen Kupplungskorb 19 mit der Zugsynchronisierkupplung 15 angeordnet. Im Vergleich zu der in Fig. 1 dargestellten Variante ergibt sich mit dem Lastschaltgetriebes 1' nach Fig. 2 bei vergleichbarem Aufwand eine höhere Funktionssicherheit. Die Funktionsweise ist jedoch, abgesehen von der Verwendung der nun separat ausgebildeten Anfahrkupplung 24 beim Anfahren, dieselbe wie zuvor beschrieben.

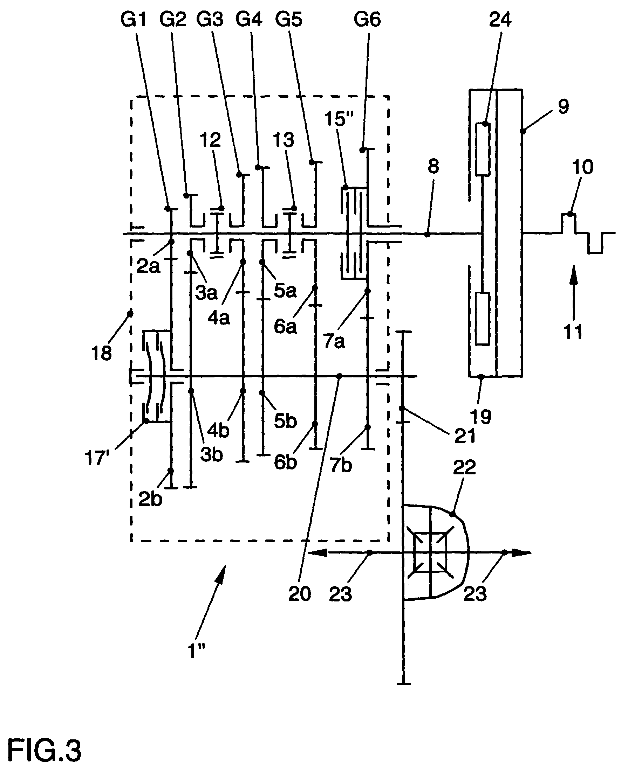

Die Figur 3 zeigt eine weitere Variante eines erfindungsgemäßen automatisierten Lastschaltgetriebes 1''. Im Unterschied zu dem in der Fig. 2 dargestellten Lastschaltgetriebe 1' ist nun auch der als Zugschaltgang vorgesehene sechste Vorwärtsgang G6 der Getriebeeingangswelle 8 zugeordnet. Das entsprechende Antriebsrad 7a ist über eine ebenfalls innerhalb des Getriebegehäuses 18 angeordnete und als Naßkupplung ausgebildete Zugsynchronisierkupplung 15'' mit der Getriebeeingangswelle 8 verbindbar, während das betreffende Abtriebsrad 7b fest mit der Getriebeabtriebswelle 20 in Verbindung steht. Hierdurch wird zusätzlich die in Fig. 1 und Fig. 2 vorhandene erste Hilfswelle 14 eingespart, so daß außerhalb des Getriebegehäuses 18 nur noch die Anfahrkupplung 24 verbleibt. Es ergibt sich somit eine wesentliche Vereinfachung im Aufbau des Lastschaltgetriebes 1'', ohne daß sich die Funktionsweise gegenüber den zuvor beschriebenen Varianten ändert.

### BEZUGSZEICHENLISTE

- 1: Lastschaltgetriebe
- 1': Lastschaltgetriebe
- 1'': Lastschaltgetriebe
- 2a: Antriebsrad des ersten Vorwärtsganges G1
- 2b: Abtriebsrad des ersten Vorwärtsganges G1
- 3a: Antriebsrad des zweiten Vorwärtsganges G2
- 3b: Abtriebsrad des zweiten Vorwärtsganges G2
- 4a: Antriebsrad des dritten Vorwärtsganges G3
- 4b: Abtriebsrad des dritten Vorwärtsganges G3
- 5a: Antriebsrad des vierten Vorwärtsganges G4
- 5b: Abtriebsrad des vierten Vorwärtsganges G4
- 6a: Antriebsrad des fünften Vorwärtsganges G5
- 6b: Abtriebsrad des fünften Vorwärtsganges G5
- 7a: Antriebsrad des sechsten Vorwärtsganges G6
- 7b: Abtriebsrad des sechsten Vorwärtsganges G6
- 8: Getriebeeingangswelle
- 9: Schwungscheibe
- 10: Kurbelwelle
- 11: Antriebsmotor
- 12: Gangschaltkupplung
- 13: Gangschaltkupplung
- 14: erste Hilfswelle
- 15: Zugsynchronisierkupplung
- 15'': Zugsynchronisierkupplung
- 16: zweite Hilfswelle
- 17: Schubsynchronisierkupplung
- 17': Schubsynchronisierkupplung
- 18: Getriebegehäuse
- 19: Kupplungskorb
- 20: Getriebeabtriebswelle
- 21: Abtriebsrad
- 22: Ausgleichsgetriebe
- 23: Abtriebswelle
- 24: Anfahrkupplung

## Patentansprüche

1. Automatisiertes Lastschaltgetriebe, insbesondere für ein Kraftfahrzeug mit einem als Verbrennungsmotor ausgebildeten Antriebsmotor, mit einer Getriebeeingangswelle (8), einer Getriebeabtriebswelle (20), einer Anfahrkupplung und mehreren mittels unsynchronisierter Gangschaltkupplungen (12, 13) schaltbaren Gangstufen, **dadurch gekennzeichnet**, daß für Zugschaltungen eine der Gangstufen in Verbindung mit einer zugeordneten Zugsynchronisierkupplung (15) als Zugschaltgang vorgesehen ist, und daß für Schubschaltungen eine andere der Gangstufen in Verbindung mit einer zugeordneten Schubsynchronisierkupplung (17) als Schubschaltgang vorgesehen ist.

2. Lastschaltgetriebe nach Anspruch 1, **dadurch gekennzeichnet**, daß der Zugschaltgang einer separaten ersten Hilfswelle (14) zugeordnet ist, und daß der Zugschaltgang über die erste Hilfswelle (14) mit der Zugsynchronisierkupplung (15) in Verbindung steht.

3. Lastschaltgetriebe nach Anspruch 1, **dadurch gekennzeichnet**, daß der Zugschaltgang der Getriebeeingangswelle (8) zugeordnet ist, und daß der Zugschaltgang unmittelbar mit der Zugsynchronisierkupplung (15) in Verbindung steht.

4. Lastschaltgetriebe nach Anspruch 3, **dadurch gekennzeichnet**, daß die Zugsynchronisierkupplung (15) zwischen einem Antriebsrad des Zugschaltganges und der Getriebeeingangswelle (8) angeordnet ist.

5. Lastschaltgetriebe nach einem der Ansprüche 1 bis 4, **dadurch gekennzeichnet**, daß der Schubschaltgang einer separaten zweiten Hilfswelle (16) zugeordnet ist, und daß der Schubschaltgang über die zweite Hilfswelle (16) mit der Schubsynchronisierkupplung (17) in Verbindung steht.

6. Lastschaltgetriebe nach einem der Ansprüche 1 bis 4, **dadurch gekennzeichnet**, daß der Schubschaltgang der Getriebeeingangswelle (8) zugeordnet ist, und daß der Schubschaltgang unmittelbar mit der Schubsynchronisierkupplung (17) in Verbindung steht.

7. Lastschaltgetriebe nach Anspruch 6, **dadurch gekennzeichnet**, daß die Schubsynchronisierkupplung (17) zwischen einem Abtriebsrad des Schubschaltganges und der Getriebeabtriebswelle (20) angeordnet ist.

8. Lastschaltgetriebe nach einem der Ansprüche 2 oder 5, **dadurch gekennzeichnet**, daß mindestens eine der Hilfswellen (14, 16) koaxial zur Getriebeeingangswelle (8) angeordnet ist, und daß die mit der Hilfswelle (14, 16) verbundene Synchronisierkupplung (15, 17) in einem gemeinsamen Kupplungsgehäuse mit der Anfahrkupplung angeordnet ist.

9. Lastschaltgetriebe nach einem der Ansprüche 1 bis 8, **dadurch gekennzeichnet**, daß die höchste Gangstufe (G6) oder die zweithöchste Gangstufe (G5) als Zugschaltgang vorgesehen ist.

10. Lastschaltgetriebe nach einem der Ansprüche 1 bis 9, **dadurch gekennzeichnet**, daß die niedrigste Gangstufe (G1) oder die zweitniedrigste Gangstufe (G2) als Schubschaltgang vorgesehen ist.

11. Lastschaltgetriebe nach Anspruch 10, **dadurch gekennzeichnet**, daß bei Verwendung der niedrigsten Gangstufe (G1) als Schubschaltgang die Anfahrkupplung und die Schubsynchronisierkupplung (17) als eine Kupplungseinheit ausgebildet sind.

12. Verfahren zur Steuerung eines erfindungsgemäßen Lastschaltgetriebes nach mindestens einem der Ansprüche 1 bis 11, **dadurch gekennzeichnet**, daß bei einer Zugschaltung von einem Quellgang in einen Zielgang, die beide nicht als Zug- oder Schubschaltgang vorgesehen sind, folgende Verfahrensschritte durchgeführt werden:
a) Schließen der Zugsynchronisierkupplung (15), bis ein wirksames Zugmoment alleine über die Zugsynchronisierkupplung (15) und den Zug- bzw. Schubschaltgang übertragen wird,
b) Öffnen der dem Quellgang zugeordneten Gangschaltkupplung (12, 13),
c) Synchronisierung der Getriebeeingangswelle (8) bezüglich der dem Zielgang zugeordneten Gangschaltkupplung (12, 13) durch Schließen oder Öffnen der Zugsynchronisierkupplung (15),
d) Schließen der dem Zielgang zugeordneten Gangschaltkupplung (12, 13), und
e) Vollständiges Öffnen der Zugsynchronisierkupplung (15).

13. Verfahren nach Anspruch 12, **dadurch gekennzeichnet**, daß bei einer Zugschaltung von dem Schubschaltgang als Quellgang in einen nicht als Zugschaltgang vorgesehenen Zielgang abweichend von Anspruch 12 im Verfahrensschritt b) die Schubsynchronisierkupplung (17) vollständig geöffnet wird.

14. Verfahren nach Anspruch 12, **dadurch gekennzeichnet**, daß bei einer Zugschaltung von einem nicht als Zugschaltgang vorgesehenen Quellgang in den Schubschaltgang als Zielgang abweichend von Anspruch 12 im Verfahrensschritt d) die Schubsynchronisierkupplung (17) vollständig geschlossen wird.

15. Verfahren nach Anspruch 12, **dadurch gekennzeichnet**, daß bei einer Zugschaltung von einem nicht als Schubschaltgang vorgesehenen Quellgang in den Zugschaltgang als Zielgang abweichend von Anspruch 12 nach Durchführung der Verfahrensschritte a) und b) die Zugsynchronisierkupplung (15) vollständig geschlossen wird.

16. Verfahren nach Anspruch 12, **dadurch gekennzeichnet**, daß bei einer Zugschaltung von dem Zugschaltgang als Quellgang in einen nicht als Schubschaltgang vorgesehenen Zielgang abweichend von Anspruch 12 nur die Verfahrensschritte c) bis e) durchgeführt werden.

17. Verfahren nach einem der Ansprüche 12 bis 16, **dadurch gekennzeichnet**, daß bei einer Schubschaltung von einem Quellgang in einen Zielgang, die beide nicht als Zug- oder Schubschaltgang vorgesehen sind, folgende Verfahrensschritte durchgeführt werden:
a) Schließen der Schubsynchronisierkupplung (17), bis ein wirksames Zugmoment alleine über die Schubsynchronisierkupplung (17) und den Schubschaltgang übertragen wird,
b) Öffnen der dem Quellgang zugeordneten Gangschaltkupplung (12, 13),
c) Synchronisierung der Getriebeeingangswelle (8) bezüglich der dem Zielgang zugeordneten Gangschaltkupplung (12, 13) durch Schließen oder Öffnen der Schubsynchronisierkupplung (17),
d) Schließen der dem Zielgang zugeordneten Gangschaltkupplung (12, 13), und
e) Vollständiges Öffnen der Schubsynchronisierkupplung (17).

18. Verfahren nach Anspruch 17, **dadurch gekennzeichnet**, daß bei einer Schubschaltung von dem Zugschaltgang als Quellgang in einen nicht als Schubschaltgang vorgesehenen Zielgang abweichend von Anspruch 17 im Verfahrensschritt b) die Zugsynchronisierkupplung (15) vollständig geöffnet wird.

19. Verfahren nach Anspruch 17, **dadurch gekennzeichnet**, daß bei einer Schubschaltung von einem nicht als Schubschaltgang vorgesehenen Quellgang in den Zugschaltgang als Zielgang abweichend von Anspruch 17 im Verfahrensschritt d) die Zugsynchronisierkupplung (15) vollständig geschlossen wird.

20. Verfahren nach Anspruch 17, **dadurch gekennzeichnet**, daß bei einer Schubschaltung von einem nicht als Zugschaltgang vorgesehenen Quellgang in den Schubschaltgang als Zielgang abweichend von Anspruch 17 nach Durchführung der Verfahrensschritte a) und b) die Schubsynchronisierkupplung (17) vollständig geschlossen wird.

21. Verfahren nach Anspruch 17, **dadurch gekennzeichnet**, daß bei einer Schubschaltung von dem Schubschaltgang als Quellgang in einen nicht als Zugschaltgang vorgesehenen Zielgang abweichend von Anspruch 17 nur die Verfahrensschritte c) bis e) durchgeführt werden.
